# EUROPEAN PATENT SPECIFICATION

(11) **EP 3 208 378 B1**
(45) Date of publication and mention of the grant of the patent: **29.08.2018**
(21) Application number: 16156419.0
(22) Date of filing: 19.02.2016
(51) Int. Cl.: E01B 27/16, F16C 11/00, F16C 17/10, F16C 17/26, F16C 23/04, F16C 23/10

(54) **BEARING FOR THE VIBRATION CYLINDER OF A BALLAST TAMPER FOR RAIL ROAD MAINTENANCE**
LAGERUNG DES VIBRATIONSZYLINDERS EINES SCHOTTERSTAMPFERS ZUR SCHIENENINSTANDHALTUNG
SUPPORT D'UN CYLINDRE VIBRANT POUR D'UNE BOURREUSE DE BALLAST POUR MAINTENANCE DE VOIES FERRÉES

(43) Date of publication of application: 23.08.2017
(73) Proprietor: Vrigstad Svets och Mekaniska AB, 570 03 Vrigstad (SE)
(72) Inventor: Karlsson, Morgan, 570 03 Vrigstad (SE)
(74) Representative: AWA Sweden AB

(56) References cited:
- AT-B- 339 943
- DE-U1- 8 915 895
- DE-U1-202012 002 697
- US-A- 3 567 262
- US-A- 3 709 573
- US-A- 4 062 292

## Description

### Technical Field

The present disclosure relates to a ballast tamper for railroad maintenance.

### Background

A ballast tamper is used in rail maintenance work to reset the ballast in a trackbed which over time deteriorate due to the heavy load from the trains. In order to reset the ballast, tamping tines, which may resemble a large pair of grippers, are sunk in the ballast around the sleepers to compact the ballast. The compacting is done by pushing the tines down in the track bed and using vibrations which pushes the ballast back under the rail. The movement of the tines is usually provided by a hydraulic or pneumatic cylinder arrangement which is connected to the tines in a radial connecting point at each end of the cylinder. Due to the amount of moving parts, the vibrations put the machine parts to a lot of stress if the parts are not tight enough. A too rattling movement of the machine parts causes the cylinders, and especially the radial connecting point, which allow for the rotational movement of the tines, to transfer uneven forces to the tines if not kept tight in place. In known solutions, the rotational movement of the cylinder end towards the tines is facilitated by a spherical plain bearing. However, the spherical bearing is spherical and the play of the bearing causes the vibrations to enhance within the cylinder. Hence, there is a need for an improved ballast tamper. A customary ballast tamper according to the preamble of the present claim 1 is described in AT 339 493 B.

### Summary

It is an object of the present invention to provide an improved solution that alleviates the mentioned drawbacks with present devices. Furthermore, it is an object to provide a ballast tamper having a cylinder arrangement having a bearing arrangement in the end connection points that provides a tight fixation in all dimensions to withstand forces in both radial and axial direction in heavy machinery.

The invention is based on the inventor's realization that one way to alleviate the drawbacks is to use a bushing and axial bearings such that axial forces as well as radial forces may be absorbed. However, the inventor's have further realized that it is difficult o provide a tight enough fit in order to reduce play within the bearings. Surprisingly, the inventors has found that by using two spherical plain bearings arranged in abutment to each other an improved ballast tamper may be achieved. That would result in a ballast tamper for railroad maintenance comprising a cylinder arrangement, a first and a second tamping tine unit, wherein each tamping tine unit comprises a first tamping tine and a second tamping tine. The cylinder arrangement has a first end and a second end, wherein each of the first and the second tamping tine unit is associated with said first and second end respectively in a first and second rotational connection point respectively, wherein the rotational connection point provides rotation such that axial displacement of the cylinder arrangement provides an inwardly or outwardly movement of the tamping tines. Further the first and second rotational connection points are provided with a first and second bearing arrangement respectively, which comprise at least a first spherical plain bearing and a second spherical plain bearing arranged in abutment to said first spherical plain bearing.

In one aspect of the invention a ballast tamper for railroad maintenance is provided which comprises a cylinder arrangement. The cylinder arrangement comprises a cylinder and a shaft arranged co-axially along a first axis. The shaft is arranged at least partly in the cylinder to allow axial displacement relative the cylinder. The ballast tamper comprises at least a first and a second tamping tine unit. Each tamping tine unit comprises at least a first tamping tine and a second tamping tine connected via a connecting arm. The cylinder arrangement has a first end and a second end. Each of the first and the second of the tamping tine unit are associated with the first and second end respectively in a first and a second rotational connection point respectively. The rotational connection point provides rotation around a second axis arranged radially relative the cylinder arrangement such that axial displacement of the cylinder arrangement provides an inwardly or outwardly movement of the tamping tines. The first and second rotational connection points are provided with a first and second bearing arrangement respectively. The bearing arrangement comprises a first spherical plain bearing and a second spherical plain bearing arranged in abutment to said first spherical plain bearing.

By using at least two spherical plain bearings in the bearing arrangement, it may result in that the rotational connection point rotates steady and reliable around the second axis B. A single spherical plain bearing may allow deviations in the axial movements of the inner and outer rings. However, by arranging at least two spherical plain bearings coaxially with each other, any deviations may be prevented. Further by allowing the bearing arrangement to consume an as large portion of the rotational connection point as possible, the rotational connection point may be less sensitive to tight tolerances. Meaning, that if instead a single spherical plain bearing was used, it would be of great importance that it would be arranged centrally in the rotational connection point so that any load from the cylinder arrangement and the tamping tines could be absorbed evenly. If placed even slightly out of range, any forces may cause the spherical plain bearing to move around its sphere. Instead, by arranging at least two spherical plain bearings coaxially along the second axis, any potential movement around the sphere of the first bearing may be stopped by the second bearing. This may allow the cylinder arrangement, the tamping tines and their connections to have a longer life since the wear on the machine parts may be reduced. Further, since the spherical plain bearings may be of the same dimensions, manufacturing of the rotational connection points may be facilitated. This due to the fact that the previous known solutions using a bushing and axial bearings may require different dimensions for each element, leading to a potentially larger error and tolerance span than that would be required for bearings of the same size.

In one embodiment, axial displacement which increase the length of the cylinder arrangement provides an inwardly movement of the tamping tines units. In yet one embodiment, axial displacement which decreases the length of the cylinder arrangement provides an outwardly movement of the tamping tines units.

In one embodiment, the first and second spherical plain bearings may be coaxially arranged in abutment to each other such that the inner ring of the first bearing may be in contact with the inner ring of the second bearing.

An advantage with arranging the two bearings as close as possible, is that there is less risk that any gaps or play between the bearings may cause the bearings to move along the second axis. Alternatively, the bearings may be separated by a distance piece. In that case, there would preferably not be any gap between the inner ring and the distance piece.

In one embodiment, the rotational connection point may comprise a housing in which the outer rings of said bearings may be arranged.

The housing may be configured such that the outer rings of the bearings may be substantially coaxially arranged with the second shaft. This may be an advantage since any pivoting movement of which a spherical plain bearing is capable of, may be prevented. This may lead to a stable and reliable arrangement.

In one embodiment, the ballast tamper may further comprise a first and a second connecting element that may connect the first and second tamping tine units with the cylinder arrangement in the first and second rotational connecting points respectively. A connecting unit may allow a flexible elongation between the tamping tine units and the cylinder arrangement. This may be an advantage since the movement that is being transferred from the cylinder arrangement to the tamping tines may be enhanced. Further, since the movement also comprises the compacting vibrations, the vibrations may be enhanced.

In one embodiment, the connecting element may comprise a rotational shaft on which the inner rings of said bearings may be arranged. The rotational shaft may be coaxially arranged with the second axis.

In one embodiment, the housing may be provided with stopping elements for preventing axial displacement of the outer rings of said bearing arrangement. This may be to ensure that any movement around either sphere may be prevented. The stopping arrangements may be arranged such that the outer rings abut the stopping arrangements. By doing this, any potential displacement may be stopped by the stopping arrangements. This may provide a steady arrangement free from internal vibrations since any unwanted movements around either spheres may be prevented.

In one embodiment, the ballast tamper may further comprise a first and a second clamping arrangement, arranged in connection to the first and second rotational connecting point respectively to press said first spherical plain bearing in abutment to said second spherical plain bearing. Hereby, the spherical plain bearings may be pressed together to reduce play and vibrations further.

In one embodiment, the clamping arrangement is a threaded arrangement. In yet one embodiment, the threaded arrangement is a sleeve and bolt coaxially arranged with the bearing arrangement. For instance, the sleeve may be comprised of the rotational shaft. The rotational shaft may thus have an internal thread on one side, and a corresponding bolt may be configured to fit into that thread. In that way, a flexible and reliable clamping solution may be provided. Also, that type of clamping arrangement may not consume too much valuable space within the tamping machine.

In one embodiment, the clamping arrangement may comprise at least one intermediate spacer between either of the sleeve or bolt and first or second spherical bearings. In that way, the clamping force may be easily varied if needed. The intermediate spacers may constitute a screw joint reinforcement in order to ensure a tight clamp. This solution may also be simple to maintain.

### Brief Description of the Drawings

The invention will in the following be described in more detail with reference to the enclosed drawings, wherein:
Fig. 1 is a perspective view of a ballast tamper according to an embodiment of the invention,
Fig. 2 is a perspective view of a cylinder arrangement according to an embodiment of the invention,
Fig 3. is a cross sectional view of a cylinder arrangement in a ballast tamper according to an embodiment of the invention.
Fig. 4 is a top view of a cylinder arrangement according to an embodiment of the invention,
Fig 5. is a cross sectional view of a bearing arrangement in a ballast tamper according to an embodiment of the invention.
Fig 6. is a cross sectional view of a bearing arrangement in a ballast tamper according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

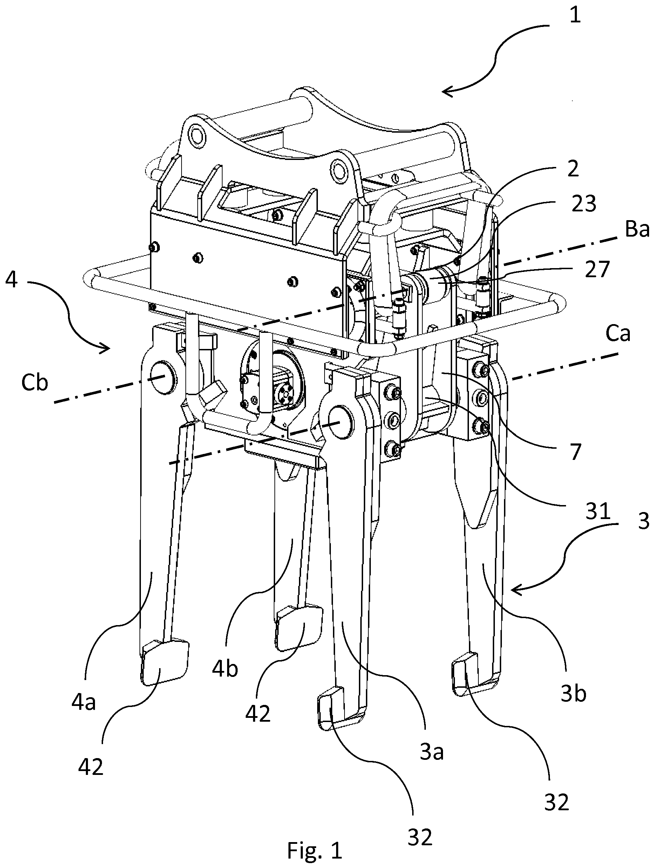

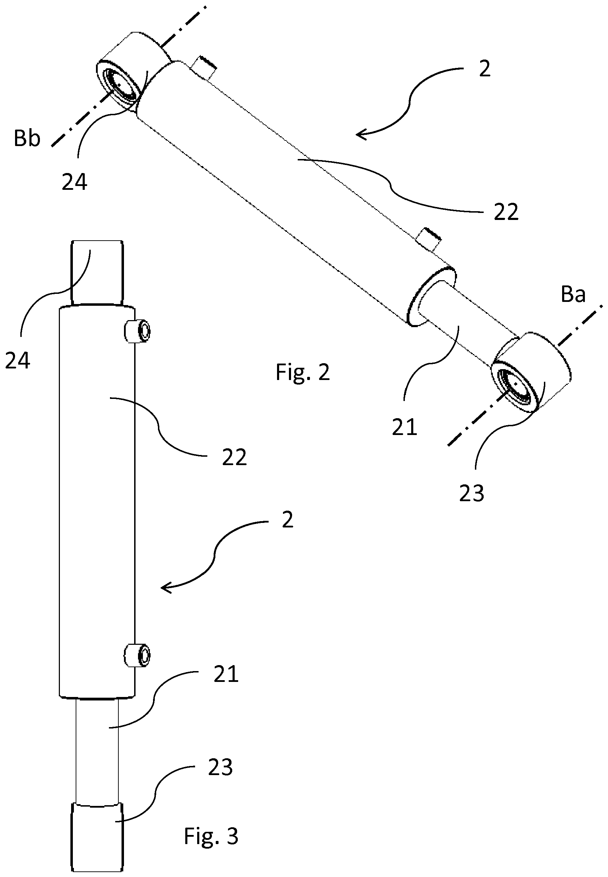

In Fig. 1, there is illustrated a ballast tamper 1 according to an embodiment. The ballast tamper is seen as when in use. When describing relative directions such as upwards, downwards, top or bottom, it is meant how it is seen in Fig. 1, since this is the general direction it is operated in. The ballast tamper 1 is provided with a first and second tamping tine unit 3, 4. The tamping tine units 3, 4 are arranged opposite each other on the ballast tamper 1, which means that the gripping portions 32, 42 on the tamping tines 3a, 3b, 4a, 4b are facing each other. Each tamping tine unit 3, 4 comprises of two tamping tines 3a, 3b, 4a, 4b. The tamping tines 3a, 3b, 4a, 4b is vertically arranged, as seen as when in use, and substantially parallel with each other. It is further possible that the tamping tines on each side would be formed from one piece of material (not shown). The tamping tines 3a, 3b, 4a, 4b in each tamping tine unit 3, 4 are rotationally connected around a third axis Ca, Cb with a horizontal first and second connecting arm 31, 41 at the top of each tamping tine 3a, 3b, 4a, 4b respectively. The same connecting arm 31 is further rotationally coupled to a connecting element 7. A similar second connecting element 8 also is connected to the second tamping tine unit 4, as seen in Fig. 2, however not shown in Fig. 1. The connecting element 7 extends in a direction towards a cylinder arrangement 2 to which it is rotationally connected about a second axis Ba. The connecting element 7 is coupled to the cylinder arrangement 2 in its first and second ends 23, 24. The cylinder arrangement 2 comprises a cylinder 22 and a shaft 21 which are arranged to provide an axial displacement of the ends 23, 24. When axial displacement of the first and second ends 23, 24 is provided, a rotation is caused to the connecting element 7, 8, causing movement to be transferred to the tamping tines.

In Fig. 2 and 3, it is shown a more clear view on how a cylinder arrangement 2 is arranged. The cylinder 22 and the shaft 21 have a first and a second end 23, 24 respectively. The first and second ends 23, 24 are similarly constructed. The first and second ends 23, 24 comprise a first and second rotational connecting point 25, 26 respectively. The rotation is done around a second rotational axis Ba, Bb. The cylinder and shaft are movably arranged relative each other, so that the total length of the cylinder arrangement may vary.

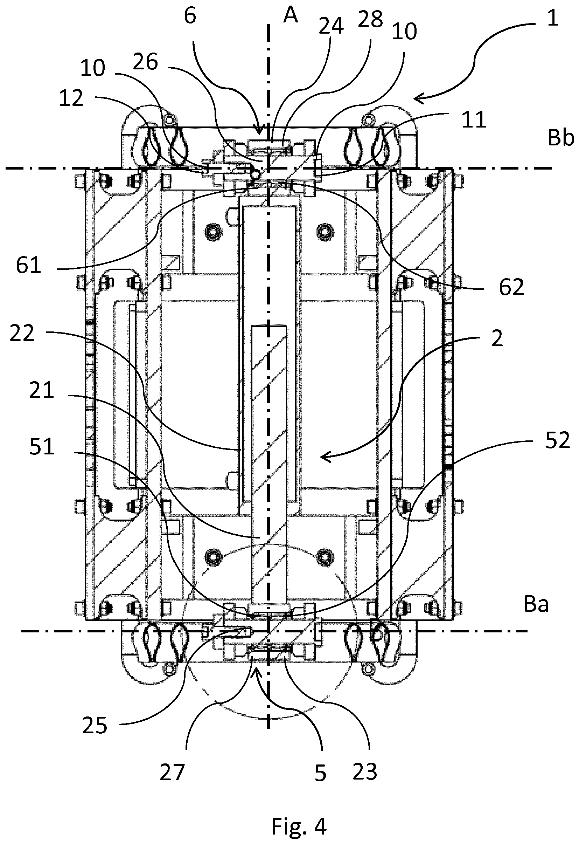

In Fig. 4, it is illustrated a cross section of the cylinder arrangement seen from the top. It is shown that the shaft 21 is slidably arranged within the cylinder 22 along a first axis A. The ends 23, 24 are comprised with means to provide a rotational movement to the connecting elements 7, 8 around a second axis Ba, Bb. This forms the first and second rotational connecting point 25, 26. The second axis Ba, Bb extends horizontally across and perpendicularly relative to the first axis A. Horizontal is meant as previously described relative to as seen in Fig. 1, which shows the direction of ballast tamper 1 in an upright use orientation.

The first and second rotational connecting points are provided with a first and second bearing arrangement 5, 6 respectively. The bearing arrangements 5, 6 are arranged on a rotational shaft 71, 81 within a housing 27, 28. The housings 27, 28 are provided at the ends of the shaft 21 and cylinder 22 respectively. The rotational shafts 71, 81 connect the connecting elements 7, 8 with the ends 23, 24 of the cylinder 22 and shaft 21. The bearing arrangement 5, 6 comprises at least a first and a second linearly arranged spherical plain bearings 51, 52, 61, 62.

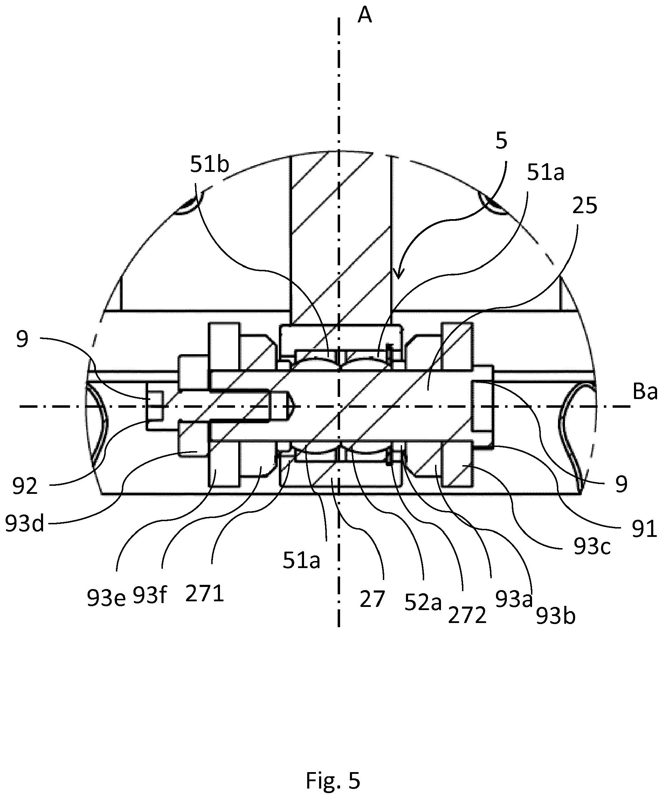

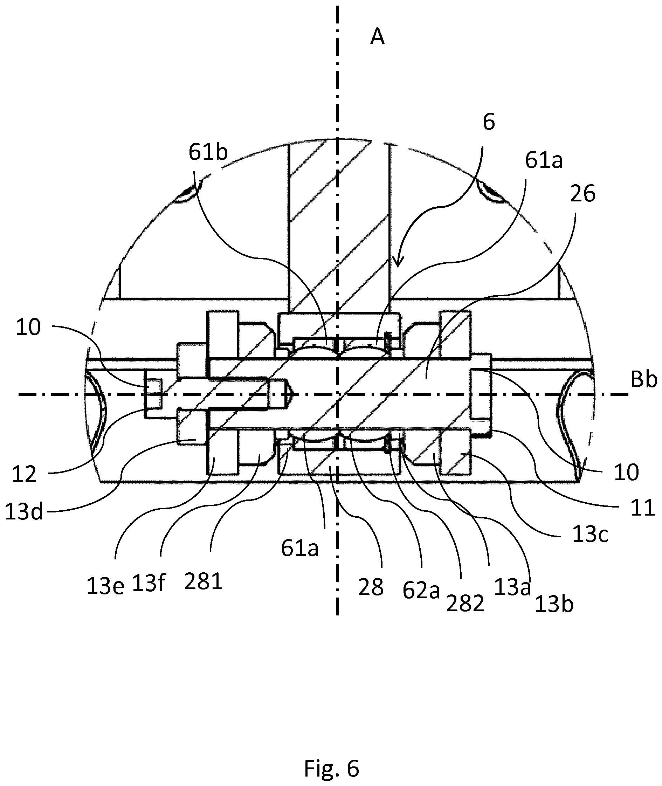

Fig. 5 shows the first bearing arrangement 5 in more detail in an enhanced cross sectional view. The second bearing arrangement 6 on the opposite side of the cylinder arrangement 2 is usually substantially similar and is represented in the same way in fig. 6. The numbering will be referred to in this paragraph.

Each bearing arrangement 5, 6 have a first and a second spherical plain bearing 51, 52, 61, 62. The first and second spherical plain bearings are arranged linearly next to each other, meaning that they are placed on the same shaft along a first rotational axis Ba, Bb. In one embodiment (not shown) there may be a third spherical plain bearing since this may contribute to more stability around the rotational end point.

In fig 5 and 6, the first and second bearings 51, 61, 52, 52 are placed in contact with each other such that the inner rings 51a, 61a, 52a, 62a touch each other. It is important that the bearings 51, 61, 52, 62 are statically arranged such that movement is prevented. In that way, the rotational connecting point 25, 26 can be stable in order to withstand forces due to vibrations and other uneven load. However, they may be placed such that a spacer is arranged between them, yet static and firm. In fig. 5 and 6, the first and second bearings 51, 61, 52, 62 are situated in a housing 27, 28, which is a part of the cylinder arrangement 2.

The housing 27, 28 is arranged such that the spherical plain bearings are fitted straight, and that there is as little play as possible. At the far ends of the bearing arrangement, there is provided first and second stopping elements 271, 272, 281, 282.

The stopping elements 271, 272, 281, 282 are arranged in the housing such that the outer rings 51b, 52b of the bearings 51, 61, 52, 62 are kept in an as static coaxial position as possible.

In fig. 5 and 6, the first stopping element 271, 281 is a shoulder incorporated in the housing, and the second stopping element 272, 282 is a circlip. It is of course possible that any suitable element may be used, such as a distance piece, or two circlips. In order to clamp the bearing arrangement 5, 6 tight together, there is a clamping arrangement 9, 10 on either side of the housing 27, 28. The clamping arrangement may be any suitable type. In fig. 5 and 6, however, the clamping arrangement 9, 10 is a threaded arrangement which comprises a bolt 92, 12 and sleeve 91, 11. The sleeve is constituted by the rotational shaft 71, 81. In order to provide a suitable clamping force on the first and second bearings 51, 61, 52, 62, the clamping arrangement has a plurality of intermediate spacers 93a-f, 13a-f.

In the drawings and specification, there have been disclosed preferred embodiments and examples of the invention and, although specific terms are employed, they are used in a generic and descriptive sense only and not for the purpose of limitation. Instead the scope of the invention is set forth in the following claims.

## Claims

1. A ballast tamper (1) for railroad maintenance comprising:
a cylinder arrangement (2), comprising a cylinder (22) and a shaft (21) arranged co-axially along a first axis (A), wherein the shaft (21) is movably arranged at least partly in the cylinder (22) to allow axial displacement relative the cylinder (22),
at least a first and a second tamping tine unit (3, 4),
wherein the cylinder arrangement (2) has a first end (23) and a second end (24), wherein each of the first (3) and the second (4) tamping tine unit is associated with said first (23) and second end (24) respectively in a first and second rotational connection point (25, 26) respectively, wherein the rotational connection point (25, 26) provides rotation around a second axis (B) running radially relative to the cylinder arrangement (2) such that axial displacement of the cylinder arrangement (2) provides an inwardly or outwardly movement of the tamping tines units (3, 4),
wherein
the first (25) and second rotational connection points (26) are provided with a first and second bearing arrangements (5, 6) respectively, ***characterised in that*** each bearing arrangement (5, 6) comprises at least a first spherical plain bearing (51, 61) and a second spherical plain bearing (52, 62) arranged in abutment to said first spherical plain bearing.

2. Ballast tamper (1) according to claim 1, wherein each tamping tine unit (3, 4) comprises at least a first tamping tine (3a, 4a) and a second tamping tine (3b, 4b) connected via a connecting arm (31, 41).

3. Ballast tamper (1) according to claim 1 or 2, wherein the first and second spherical plain bearings (51, 61: 52, 62) are coaxially arranged in abutment to each other such that the inner ring (51a, 52a) of the first bearing (51, 52) is in contact with the inner ring (61a, 62a) of the second bearing (61, 62).

4. Ballast tamper (1) according to any one of claims 1-3, wherein the rotational connection point (25, 26) comprises a housing (27, 28) in which the outer rings (51b, 52b, 61b, 62b) of said bearings (51, 52, 61, 62) are arranged.

5. Ballast tamper (1) according to any one of claims 1-4, further comprising a first and a second connecting element (7, 8) connecting the first and second tamping tine units (3, 4) with the cylinder arrangement (2) in the first and second rotational connecting points (25, 26), respectively.

6. Ballast tamper (1) according to any one of claims 1-5, wherein said connecting element (7, 8) comprises a rotational shaft (71, 81) on which the inner rings (51a, 52a, 61a, 62a) of said bearings (51, 52, 61, 62) are arranged.

7. Ballast tamper (1) according to claim 4 or anyone of claims 5 and 6, each in combination with claim 4, wherein said housing is provided with stopping elements (271, 272; 281, 282) for preventing axial displacement of the outer rings (51b, 52b; 61b, 62b) of said bearing arrangement (5, 6).

8. Ballast tamper (1) according to any of the claims 5-7, further comprising a first and a second clamping arrangement (9, 10), arranged in connection to the first and second rotational connecting point (25, 26) respectively to press said first spherical plain bearing (51, 61) in abutment to said second spherical plain bearing (52, 62).

9. Ballast tamper (1) according to claim 8, wherein the clamping arrangement (9, 10) is a threaded arrangement.

10. Ballast tamper (1) according to claim 9, wherein the threaded arrangement is a sleeve (91, 11) and bolt coaxially arranged with the bearing arrangement (5, 6).

11. Ballast tamper (1) according to claim 10, wherein the clamping arrangement (9, 10) comprises at least one intermediate spacer (93, 13) between either of the sleeve or bolt and first or second spherical bearings (51, 61; 52, 62).

## Patentansprüche

1. Schotterstampfer (1) für Schieneninstandhaltung, der Folgendes aufweist:
eine Zylinderanordnung (2), die einen Zylinder (22) und eine Welle (21) aufweist, die koaxial entlang einer ersten Achse (A) angeordnet sind,
wobei die Welle (21) zumindest teilweise beweglich in dem Zylinder (22) angeordnet ist, um axiale Verschiebung bezüglich des Zylinders (22) zu gestatten,
mindestens eine erste und eine zweite Stopfpickeleinheit (3, 4) wobei die Zylinderanordnung (2) ein erstes Ende (23) und ein zweites Ende (24) aufweist, wobei jeweils die erste (3) und die zweite (4) Stopfpickeleinheit jeweils dem ersten (23) und zweiten Ende (24) jeweils an einem ersten und zweiten Drehverbindungspunkt (25, 26) zugeordnet ist, wobei der Drehverbindungspunkt (25, 26) Drehung um eine zweite Achse (B) vorsieht, die radial bezüglich der Zylinderanordnung (2) verläuft, derart, dass die axiale Verschiebung der Zylinderanordnung (2) eine Bewegung der Stopfpickeleinheiten (3, 4) nach innen oder nach außen vorsieht,
wobei
der erste (25) und zweite Drehverbindungspunkt (26) jeweils mit einer ersten und zweiten Lageranordnung (5, 6) versehen sind,
**dadurch gekennzeichnet, dass**
jede Lageranordnung (5, 6) mindestens ein erstes kugelförmiges Gleitlager (51, 61) und ein zweites kugelförmiges Gleitlager (52, 62), das anliegend an das erste kugelförmige Gleitlager angeordnet ist, aufweist.

2. Schotterstampfer (1) nach Anspruch 1, wobei jede Stopfpickeleinheit (3, 4) mindestens einen ersten Stopfpickel (3a, 4a) und einen zweiten Stopfpickel (3b, 4b), die über einen Verbindungsarm (31, 41) verbunden sind, aufweist.

3. Schotterstampfer (1) nach Anspruch 1 oder 2, wobei das erste und zweite kugelförmige Gleitlager (51, 61; 52, 62) koaxial aneinander anliegend angeordnet sind, derart, dass der Innenring (51a, 52a) des ersten Lagers (51, 52) mit dem Innenring (61a, 62a) des zweiten Lagers (61, 62) in Berührung steht.

4. Schotterstampfer (1) nach einem der Ansprühe 1 bis 3, wobei der Drehverbindungspunkt (25, 26) ein Gehäuse (27, 28) aufweist, in dem die Außenringe (51b, 52b, 61b, 62b) der Lager (51, 52, 61, 62) angeordnet sind.

5. Schotterstampfer (1) nach einem der Ansprüche 1 bis 4, der ferner ein erstes und ein zweites Verbindungselement (7, 8) aufweist, das die erste und zweite Stopfpickeleinheit (3, 4) mit der Zylinderanordnung (2) jeweils an dem ersten und zweiten Drehverbindungspunkt (25, 26) verbindet.

6. Schotterstampfer (1) nach einem der Ansprühe 1 bis 5, wobei das Verbindungselement (7, 8) eine Rotationswelle (71, 81) aufweist, an der die Innenringe (51a, 52a, 61a, 62a) der Lager (51, 52, 61, 62) angeordnet sind.

7. Schotterstampfer (1) nach Anspruch 4 oder nach einem der Ansprüche 5 und 6, jeweils in Kombination mit Anspruch 4, wobei das Gehäuse mit Anschlagelementen (271, 272, 281, 282) versehen ist, um axiale Verschiebung der Außenringe (51b, 52b; 61b, 62b) der Lageranordnung (5, 6) zu verhindern.

8. Schotterstampfer (1) nach einem der Ansprüche 5 bis 7, der ferner eine erste und eine zweite Klemmanordnung (9, 10) aufweist, die jeweils in Verbindung mit dem ersten und zweiten Drehverbindungspunkt (25, 26) angeordnet sind, um das erste kugelförmige Gleitlager (51, 61) derart zu drücken, dass es am zweiten kugelförmigen Gleitlager (52, 62) anliegt.

9. Schotterstampfer (1) nach Anspruch 8, wobei es sich bei der Klemmanordnung (9, 10) um eine Gewindeanordnung handelt.

10. Schotterstampfer (1) nach Anspruch 9, wobei es sich bei der Gewindeanordnung um eine Hülse (91, 11) und einen Bolzen handelt, die koaxial mit der Lageranordnung (5, 6) angeordnet sind.

11. Schotterstampfer (1) nach Anspruch 10, wobei die Klemmanordnung (9, 10) mindestens einen Zwischenabstandshalter (93, 13) zwischen jeweils der Hülse und dem Bolzen und dem ersten und zweiten kugelförmigen Gleitlager (51, 61; 52, 62) aufweist.

## Revendications

1. Dameuse de ballast (1) destinée à la maintenance de voies ferrées, comprenant :
un agencement de cylindre (2) comprenant un cylindre (22) et un arbre (21) agencés coaxialement selon un premier axe (A), dans laquelle l'arbre (21) est agencé de façon mobile au moins partiellement dans le cylindre (22) pour permettre un déplacement axial relatif du cylindre (22),
au moins des première et deuxième unités à dents de damage (3, 4),
dans laquelle l'agencement de cylindre (2) comporte une première extrémité (23) et une deuxième extrémité (24), dans laquelle chacune des première (3) et deuxième (4) unités à dents de damage est associée respectivement auxdites première extrémité (23) et deuxième extrémité (24), respectivement à des premier et deuxième points de connexion tournante (25, 26), dans laquelle le point de connexion tournante (25, 26) procure une rotation autour d'un deuxième axe (B) disposé radialement par rapport à l'agencement de cylindre (2), de telle sorte qu'un déplacement axial de l'agencement de cylindre (2) procure un déplacement vers l'intérieur ou vers l'extérieur des unités à dents de damage (3, 4),
dans laquelle les premier (25) et deuxième points de connexion tournante (26) sont respectivement pourvus de premier et deuxième agencements de palier (5, 6),
**caractérisée en ce que** chaque agencement de palier (5, 6) comprend au moins un premier palier lisse sphérique (51, 61) et un deuxième palier lisse sphérique (52, 62) agencé à butée contre ledit premier palier lisse sphérique.

2. Dameuse de ballast (1) selon la revendication 1, dans laquelle chaque unité à dents de damage (3, 4) comprend au moins une première dent de damage (3a, 4a) et une deuxième dent de damage (3b, 4b) connectées via un bras de connexion (31, 41).

3. Dameuse de ballast (1) selon la revendication 1 ou 2, dans laquelle les premier et deuxième paliers lisses sphériques (51, 61 ; 52, 62) sont agencés coaxialement à butée l'un contre l'autre de telle sorte que l'anneau interne (51a, 52a) du premier palier (51, 52) est en contact avec l'anneau interne (61a, 62a) du deuxième palier (61, 62).

4. Dameuse de ballast (1) selon l'une quelconque des revendications 1 à 3, dans laquelle le point de connexion tournante (25, 26) comprend un boîtier (27, 28) dans lequel sont agencés les anneaux externes (51b, 52b, 61b, 62b) desdits paliers (51, 52, 61, 62).

5. Dameuse de ballast (1) selon l'une quelconque des revendications 1 à 4, comprenant en outre des premier et deuxième éléments de connexion (7, 8) qui connectent respectivement les première et deuxième unités à dents de damage (3, 4) avec l'agencement de cylindre (2) aux premier et deuxième points de connexion tournante (25, 26).

6. Dameuse de ballast (1) selon l'une quelconque des revendications 1 à 5, dans laquelle ledit élément de connexion (7, 8) comprend un arbre de rotation (71, 81) sur lequel sont agencés les anneaux internes (51a, 52a, 61a, 62a) desdits paliers (51, 52, 61, 62).

7. Dameuse de ballast (1) selon la revendication 4 ou l'une quelconque des revendications 5 et 6, chacune en combinaison avec la revendication 4, dans laquelle ledit boîtier est pourvu d'éléments d'arrêt (271, 272 ; 281, 282) pour éviter un déplacement axial des anneaux externes (51b, 52b ; 61b, 62b) dudit agencement de palier (5, 6).

8. Dameuse de ballast (1) selon l'une quelconque des revendications 5 à 7, comprenant en outre des premier et deuxième agencements de serrage (9, 10), agencés respectivement en connexion avec les premier et deuxième points de connexion tournante (25, 26) pour serrer ledit premier palier lisse sphérique (51, 61) à butée contre ledit deuxième palier lisse sphérique (52, 62).

9. Dameuse de ballast (1) selon la revendication 8, dans laquelle l'agencement de serrage (9, 10) est un agencement fileté.

10. Dameuse de ballast (1) selon la revendication 9, dans laquelle l'agencement fileté est constitué d'un manchon (91, 11) et d'un boulon agencés coaxialement avec l'agencement de palier (5, 6).

11. Dameuse de ballast (1) selon la revendication 10, dans laquelle l'agencement de serrage (9, 10) comprend au moins une entretoise intermédiaire (93, 13) entre soit le manchon, soit le boulon, et soit le premier, soit le deuxième palier sphérique (51, 61 ; 52, 62).
